(19)

**Europäisches Patentamt**
**European Patent Office**
**Office européen des brevets**

(11)  **EP 3 557 185 A1**

(12)  # EUROPEAN PATENT APPLICATION

(43) Date of publication:
**23.10.2019 Bulletin 2019/43**

(21) Application number: **19158420.0**

(22) Date of filing: **25.11.2013**

(51) Int Cl.:
*G01C 21/34* (2006.01)     *G01C 21/26* (2006.01)
*G08G 1/0968* (2006.01)    *G01C 21/20* (2006.01)
*G01C 21/36* (2006.01)     *G01S 19/39* (2010.01)
*G08G 1/005* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.03.2013  CN 201310067786**

(62) Document number(s) of the earlier application(s) in
accordance with Art. 76 EPC:
**13876861.9 / 2 950 047**

(71) Applicant: **Huawei Technologies Co., Ltd.
Shenzhen, Guangdong 518129 (CN)**

(72) Inventors:
• **LI, Li
Shenzhen, Guangdong 518129 (CN)**

• **DING, Qiang
Shenzhen, Guangdong 518129 (CN)**
• **LU, Jia
Shenzhen, Guangdong 518129 (CN)**

(74) Representative: **Körber, Martin Hans
Mitscherlich PartmbB
Patent- und Rechtsanwälte
Sonnenstrasse 33
80331 München (DE)**

Remarks:
•This application was filed on 21.02.2019 as a
divisional application to the application mentioned
under INID code 62.
•Claims filed after the date of filing of the application
(Rule 68(4) EPC).

(54)  ## METHOD AND TERMINAL DEVICE FOR PROCESSING PEDESTRIAN NAVIGATION

(57)     Embodiments of the present invention provide a pedestrian navigation processing method and system, and a terminal device. The pedestrian navigation processing method includes: determining, according to a current position of a user and navigation planning route information, a road section on which the user is currently located, where the navigation planning route information includes route information of all road sections between a departure place and a destination; obtaining a road width of the road section according to a positioning result obtained when the user walks on the road section and route information of the road section; determining, according to the road width, a navigation prompt time corresponding to the road section; and performing navigation prompting for the user according to the navigation prompt time. The embodiments of the present invention may perform accurate navigation for a pedestrian.

FIG. 3

**Description**

**TECHNICAL FIELD**

Embodiments of the present invention relate to communications technologies, and in particular, to a method, system and terminal device for processing pedestrian navigation .

**BACKGROUND**

With popularity and development of a terminal device, such as a smartphone or a tablet computer, a convenient pedestrian navigation service provided on the terminal device for a user has become a primary requirement of a user.

In the prior art, the pedestrian navigation service mainly provides navigation prompts for the user in two aspects: a turning prompt and a route-replanning prompt. For the turning prompt, when the user arrives in an intersection range, the terminal device needs to prompt the user with a turning direction in advance, for example, prompt the user by means of a voice prompt, a text prompt, and a direction arrow icon. For the route-replanning prompt, after a position of the user deviates from a preset navigation planning route by a specific distance, the terminal device needs to prompt the user whether to replan a navigation route, for example, a dialog box is displayed and prompts the user with "You have deviated from the navigation planning route. Do you need to replan a navigation route?".

However, the following problem frequently occurs in the prior art: for the turning prompt, the user needs to turn at a second intersection, but the terminal device prompts the user to turn in an intersection range of a first intersection or the terminal device prompts the user to turn after the user has passed through the second intersection; or for the route-replanning prompt, either the terminal device frequently prompts that the user has deviated from the navigation planning route, or, after the user deviates from a preset navigation planning route for a long distance, the terminal device prompts that the user has deviated from the navigation planning route. Therefore, how to perform accurate navigation for a pedestrian becomes an urgent technical problem.

**SUMMARY**

Embodiments of the present invention provide a method, system and terminal device for processing pedestrian navigation, which are used to improve navigation accuracy to some extent.

According to a first aspect, an embodiment of the present invention provides a pedestrian navigation processing method, including: determining, according to a current position of a user and navigation planning route information, a road section on which the user is currently located, where the navigation planning route information includes route information of all road sections between a departure place and a destination; obtaining a road width of the road section according to a positioning result obtained when the user walks on the road section and route information of the road section; determining, according to the road width, a navigation prompt time corresponding to the road section; and performing navigation prompting for the user according to the navigation prompt time.

With reference to the first aspect, in a first possible implementation manner, the obtaining a road width of the road section according to a positioning result obtained when the user walks on the road section and route information of the road section includes: sending, to a network side device, the positioning result obtained when the user walks on the road section and the route information of the road section, to request the network side device to obtain the road width of the road section according to the positioning result and the route information of the road section; and receiving the road width of the road section sent by the network side device.

With reference to the first aspect and the first possible implementation manner of the first aspect, in a second possible implementation manner, the obtaining a road width of the road section according to a positioning result obtained when the user walks on the road section and route information of the road section includes: determining a current position of the user according to one positioning result obtained when the user walks on the road section; determining, according to the route information of the road section, a center line of the road section on which the user is currently located; determining a vertical distance between the current position of the user and the center line of the road section on which the user is currently located; and using the vertical distance as a half road width of the road section on which the user is currently located.

With reference to the second possible implementation manner, in a third possible implementation manner, the determining, according to the road width, a navigation prompt time corresponding to the road section includes: adjusting, according to the road width, a navigation prompt range corresponding to the road section; or, adjusting, according to the road width and a confidence level of the road width, a navigation prompt range corresponding to the road section, where the confidence level of the road width is positioning precision of the one positioning result; and determining the navigation prompt time according to the adjusted navigation prompt range.

With reference to the first aspect and the first possible implementation manner of the first aspect, in a fourth possible implementation manner, the obtaining a road width of the road section according to a positioning result obtained when the user walks on the road section and route information of the road section includes: determining at least two positions of the user according to at least two positioning results obtained when the user walks on the road section; determining, according to the route information of the road section, a center line of the road section on which the user is currently located; determining a vertical distance between each position of the at least two positions and the center line of the road section on which the user is currently located; performing weighted average on the determined vertical distances according to positioning precision of the at least two positioning results; and using a vertical distance obtained by performing weighted average as a half road width of the road section on which the user is currently located.

With reference to the fourth possible implementation manner, in a fifth possible implementation manner, the determining, according to the road width, a navigation prompt time corresponding to the road section includes: adjusting, according to the road width, a navigation range corresponding to the road section; or, adjusting, according to the road width and a confidence level of the road width, a navigation prompt range corresponding to the road section, where the confidence level of the road width is determined according to a quantity of positioning times of the at least two positioning results, a variance of the vertical distances, and mean positioning precision; and determining the navigation prompt time according to the adjusted navigation prompt range.

With reference to the third possible implementation manner and the fifth possible implementation manner, in a sixth possible implementation manner, the adjusting, according to the road width, a navigation prompt range corresponding to the road section includes: if the road width is greater than a preset width, expanding the navigation prompt range; otherwise, narrowing the navigation prompt range or using a default navigation prompt range; and the adjusting, according to the road width and a confidence level of the road width, a navigation prompt range corresponding to the road section includes: if the road width is greater than a preset width and the confidence level is greater than a preset confidence level, expanding the navigation prompt range; otherwise, narrowing the navigation prompt range or using a default navigation prompt range.

With reference to the third possible implementation manner, the fifth possible implementation manner, or the sixth possible implementation manner, in a seventh possible implementation manner, the navigation prompt range is a turning prompt range corresponding to the road section, where the turning prompt range is a region range using a connection point of the road section and a next road section as a center; and the determining the navigation prompt time according to the adjusted navigation prompt range includes: if the user enters the adjusted turning prompt range, determining that a turning prompt time comes.

With reference to the third possible implementation manner, the fifth possible implementation manner, or the sixth possible implementation manner, in an eighth possible implementation manner, the navigation prompt range is an adjacent road section region corresponding to the road section, where the adjacent road section region is a region range using a center line of the road section as a center; and the determining the navigation prompt time according to the adjusted navigation prompt range includes: if a position of the user is beyond the adjusted adjacent road section region, determining that a route-replanning prompt time comes.

With reference to any one of the foregoing possible implementation manners, in a ninth possible implementation manner, the determining, according to a current position of a user and navigation planning route information, a road section on which the user is currently located includes: matching latitude and longitude of the current position of the user with latitude and longitude of a starting point and latitude and longitude of an ending point of all road sections in the navigation planning route information, to determine the road section on which the user is currently located.

According to a second aspect, an embodiment of the present invention provides a terminal device, including: a road section determining module, configured to determine, according to a current position of a user and navigation planning route information, a road section on which the user is currently located, where the navigation planning route information includes route information of all road sections between a departure place and a destination; a road section width determining module, configured to obtain a road width of the road section according to a positioning result obtained when the user walks on the road section and route information of the road section, and send the road width of the road section to a navigation prompt time determining module; the navigation prompt time determining module, configured to receive the road width of the road section sent by the road section width determining module, determine, according to the road width, a navigation prompt time corresponding to the road section, and send the navigation prompt time to a navigation prompt module; and the navigation prompt module, configured to receive the navigation prompt time sent by the navigation prompt time determining module, and perform navigation prompting for the user according to the navigation prompt time.

With reference to the second aspect, in a first possible implementation manner, the road section width determining module is specifically configured to: send, to a network side device, the positioning result obtained when the user walks on the road section and the route information of the road section, to request the network side device to obtain the road width of the road section according to the positioning result and the route information of the road section; and receive the road width of the road section sent by the network side device.

With reference to the second aspect, in a second possible implementation manner, the road section width determining module is specifically configured to: determine a current position of the user according to one positioning result obtained when the user walks on the road section; determine, according to the route information of the road section, a center line of the road section on which the user is currently located; determine a vertical distance between the current position of the user and the center line of the road section on which the user is currently located; and use the vertical distance as a half road width of the road section on which the user is currently located.

With reference to the second possible implementation manner, in a third possible implementation manner, the navigation prompt time determining module is specifically configured to: adjust, according to the road width, a navigation prompt range corresponding to the road section; or, adjust, according to the road width and a confidence level of the road width, a navigation prompt range corresponding to the road section, where the confidence level of the road width is positioning precision of the one positioning result; and determine the navigation prompt time according to the adjusted navigation prompt range.

With reference to the second aspect, in a fourth possible implementation manner, the road section width determining module is specifically configured to: determine at least two positions of the user according to at least two positioning results obtained when the user walks on the road section; determine, according to the route information of the road section, a center line of the road section on which the user is currently located; determine a vertical distance between each position of the at least two positions and the center line of the road section on which the user is currently located; perform weighted average on the determined vertical distances according to positioning precision of the at least two positioning results; and use a vertical distance obtained by performing weighted average as a half road width of the road section on which the user is currently located.

With reference to the fourth possible implementation manner, in a fifth possible implementation manner, the navigation prompt time determining module is specifically configured to: adjust, according to the road width, a navigation prompt range corresponding to the road section; or, adjust, according to the road width and a confidence level of the road width, a navigation prompt range corresponding to the road section, where the confidence level of the road width is determined according to a quantity of positioning times of the at least two positioning results, a variance of the vertical distances, and mean positioning precision; and determine the navigation prompt time according to the adjusted navigation prompt range.

With reference to the third possible implementation manner and the fifth possible implementation manner, in a sixth possible implementation manner, the navigation prompt time determining module is specifically configured to, if the road width is greater than a preset width, expand the navigation prompt range; otherwise, narrow the navigation prompt range or use a default navigation prompt range; or the navigation prompt time determining module is specifically configured to, if the road width is greater than a preset width and the confidence level is greater than a preset confidence level, expand the navigation prompt range; otherwise, narrow the navigation prompt range or use a default navigation prompt range.

With reference to the third possible implementation manner, the fifth possible implementation manner, or the sixth possible implementation manner, in a seventh possible implementation manner, the navigation prompt range is a turning prompt range corresponding to the road section, where the turning prompt range is a region range using a connection point of the road section and a next road section as a center; and the navigation prompt time determining module is specifically configured to, if the user enters the adjusted turning prompt range, determine that a turning prompt time comes.

With reference to the third possible implementation manner, the fifth possible implementation manner, or the sixth possible implementation manner, in an eighth possible implementation manner, the navigation prompt range is an adjacent road section region corresponding to the road section, where the adjacent road section region is a region range using a center line of the road section as a center; and the navigation prompt time determining module is specifically configured to, if a position of the user is beyond the adjusted adjacent road section region, determine that a route-replanning prompt time comes.

With reference to any one of the foregoing possible implementation manners, in a ninth possible implementation manner, the road section determining module is specifically configured to match latitude and longitude of the current position of the user with latitude and longitude of a starting point and latitude and longitude of an ending point of all road sections in the navigation planning route information, to determine the road section on which the user is currently located.

According to a third aspect, an embodiment of the present invention provides a pedestrian navigation processing system, including: a terminal device, configured to: determine, according to a current position of a user and navigation planning route information, a road section on which the user is currently located, where the navigation planning route information includes route information of all road sections between a departure place and a destination; send, to a network side device, a positioning result obtained when the user walks on the road section and route information of the road section, to request the network side device to obtain a road width of the road section according to the positioning result and the route information of the road section, and receive the road width of the road section sent by the network side device; determine, according to the road width, a navigation prompt time corresponding to the road section; and perform navigation prompting for the user according to the navigation prompt time; and the network side device, configured to: receive the positioning result obtained when the user walks on the road section and the route information of the road section that are sent by the terminal device; obtain the road width of the road section according to the positioning result and the route information of the road section; and send the road width of the road section to the terminal device.

It can be seen that the embodiments of the present invention provide a pedestrian navigation processing method and system, and a terminal device, which may determine, according to a current position of a user and navigation planning route information, a road section on which the user is currently located; then obtain a road width of the road section according to a positioning result obtained when the user walks on the road section and route information of the road section; and further determine a navigation prompt time according to the road width, and perform navigation prompting for the user according to the navigation prompt time. Therefore, on each road section of a navigation planning route, a navigation prompt time can be dynamically adjusted according to a road width of the road section, so as to resolve a problem, in the prior art, of inaccurate navigation caused by a road width difference between the road sections, thereby effectively improving guiding effect of navigation.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of a first embodiment of a pedestrian navigation prompt method according to an embodiment of the present invention;

FIG. 2 is a flowchart of a second embodiment of a pedestrian navigation processing method according to an embodiment of the present invention;

FIG. 3 is a schematic diagram of an adjustment process specific to a turning prompt in the second method embodiment shown in FIG. 2;

FIG. 4 is a schematic diagram of another adjustment process specific to the turning prompt in the second method embodiment shown in FIG. 2;

FIG. 5 is a schematic diagram of an adjustment process specific to a route-replanning prompt in the second method embodiment shown in FIG. 2;

FIG. 6 is a schematic structural diagram of a first embodiment of a terminal device according to an embodiment of the present invention;

FIG. 7 is a schematic structural diagram of a second embodiment of a terminal device according to an embodiment of the present invention;

FIG. 8 is a schematic structural diagram of a third embodiment of a terminal device according to an embodiment of the present invention; and

FIG. 9 is a schematic structural diagram of an embodiment of a pedestrian navigation processing system according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

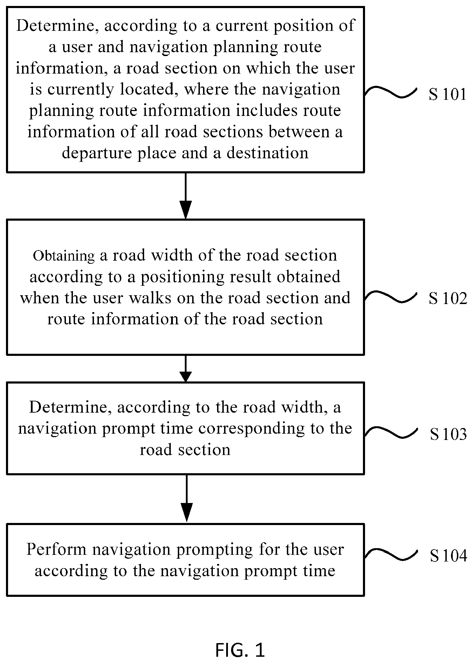

FIG. 1 is a flowchart of a first embodiment of a pedestrian navigation prompt method according to an embodiment of the present invention. As shown in FIG. 1, the method in this embodiment may include:

S101. Determine, according to a current position of a user and navigation planning route information, a road section on which the user is currently located, where the navigation planning route information includes route information of all road sections between a departure place and a destination.

S102. Obtain a road width of the road section according to a positioning result obtained when the user walks on the road section and route information of the road section.

S103. Determine, according to the road width, a navigation prompt time corresponding to the road section.

S104. Perform navigation prompting for the user according to the navigation prompt time.

In an existing pedestrian navigation service, a terminal device uses a preset constant prompt threshold to determine a prompt time of performing navigation prompting for a user.

Specifically, by using a turning prompt as an example, a turning prompt range may be preset on the terminal device, where the turning prompt range is generally a region range using an intersection as a center. For example, the region range may be a circular region range or may be a rectangular region range. Correspondingly, a turning prompt time is a moment when the user walks into the turning prompt range of a turning intersection. After the user walks into the turning prompt range, the terminal device performs turning prompt for the user. However, only one size of the turning prompt range is set in the prior art; for example, a circular region range that uses the intersection as a center and whose radius is R is set, that is, all turning intersections have same set turning prompt ranges. Therefore, for a relatively narrow road section, the turning prompt range may be too large, the turning prompt range may cover a turning intersection of the road section and a non-turning intersection of a previous road section, and the terminal device prompts the user to turn at the non-turning intersection of the previous road section, which causes that the user incorrectly turns. For a relatively wide road section, the turning prompt range may be too small, and the terminal device may prompt the user to turn only when the user is close to the turning intersection or even after the user passes through the turning intersection, causing untimely prompting.

By using a route-replanning prompt as an example, an adjacent road section region may also preset on the terminal device, where the adjacent road section region is generally a region range using a center line of the road section as a center. For example, the region range may be a rectangular region range or may be an oval or circular region range. Correspondingly, a route-replanning prompt time is a moment when the user walks out of the adjacent road section region. After the user walks out of the adjacent road section region, the terminal device performs route-replanning prompting for the user, or prompts the user in a specific period of time after the user walks out of the adjacent road section region. However, only one size of the adjacent road section region is set in the prior art; for example, a rectangular region range that uses the center line of the road section as a center and whose area is S is set, that is, all road sections have same set adjacent road section regions, where the center line of the road section is a line between a starting point and an ending point of the road section. Therefore, for a relatively narrow road section, the adjacent road section region may be too large, and the terminal device prompts the user to replan a route after the user deviates from a planning road section by a relatively long distance, causing untimely prompting. For a relatively wide road section, the adjacent road section region may be too small, and the terminal device prompts the user to replan a route when the user deviates by only a little distance, which causes a case of frequently prompting the user.

Analysis shows that, in the pedestrian navigation service, a road width difference imposes relatively large impact on navigation accuracy. A general walking road is mainly an internal road of, for example, a school, a park, a residential area, and a block, or a path; and a half road width (that is, half of an entire road width) is generally 1-10 meters; and for a traffic trunk street in a big city, the half road width may be more than 10 meters. However, in the navigation prompt process of the prior art described above, a road width difference between road sections on a preset planning route is not considered.

Therefore, this embodiment provides a pedestrian navigation prompt method for determining a navigation prompt time based on a road section width.

Specifically, when a user needs navigation, the user may preset a departure place and a destination on a terminal device; or, if there is a default departure place on the terminal device, the user needs to set only a destination. For example, a setting manner may be a text input manner, a voice input manner, a manner of clicking and selecting on a map, or the like. A specific setting process is similar to an existing navigation setting process, which is not further described herein.

If the departure place and the destination are determined, the terminal device may obtain navigation planning route information. For example, the terminal device may obtain, according to the departure place and the destination, the navigation planning route information from the departure place to the destination by invoking a third-party service, for example, by invoking the Baidu Maps or the Google Maps.

The navigation planning route information in this embodiment may include route information of all road sections from the departure place to the destination. Each road section, for example, may be represented by latitude and longitude of a starting point and an ending point of the road section.

In a navigation process, the terminal device may use a positioning function to obtain a current position of the user, and the process, for example, may use a global positioning system (Global Positioning System, GPS for short) positioning function, or optionally, may use a BeiDou positioning function. In a premise that the positioning function is enabled, the terminal device may periodically or aperiodically obtain a current position of the user. Preferably, the terminal device may obtain a current position of the user at regular intervals. The obtained current position of the user, for example, may be latitude and longitude information. Optionally, the terminal device may further obtain positioning precision, for example, GPS positioning precision; the GPS positioning precision, for example, may be represented by using a positioning radius, where the positioning radius, for example, may be 5 m, 10 m, or 15 m, and a smaller radius indicates higher positioning precision.

The terminal device may determine, according to the current position of the user and the navigation planning route information, a road section on which the user is currently located. For example, the terminal device may match latitude and longitude of the current position of the user with latitude and longitude information of all road sections in the navigation planning route information, so as to determine the road section on which the user is currently located.

After determining the road section on which the user is currently located, the terminal device may obtain, according to a positioning result obtained when the user walks on the road section and route information of the road section, a road width of the road section on which the user is currently located. The obtaining process may be implemented by using the following two manners:

A first manner: The terminal device performs local processing and acquires, according to the positioning result obtained when the user walks on the road section and the route information of the road section, the road width of the road section on which the user is currently located.

A second manner: The terminal device sends, to a network side device, for example, a base station or a radio network controller, the positioning result obtained when the user walks on the road section and the route information of the road section; the network side device obtains, according to the positioning result obtained when the user walks on the road section and the route information of the road section, the road width of the road section on which the user is currently located, and sends the obtained road width to the terminal device, so that the terminal device may obtain the road width of the road section on which the user is currently located.

Either in the first manner or in the second manner described above, the obtaining, according to the positioning result obtained when the user walks on the road section and the route information of the road section, the road width of the road section on which the user is currently located may be implemented, for example, by using the following processing processes:

Single-positioning manner: calculating, according to one positioning result obtained when the user walks on the road section, a vertical distance from a position of the user on the road section to a center line of the road section, where the road width of the road section is twice the vertical distance.

Optionally, the terminal device may further use the positioning precision as a confidence level, where the confidence level represents an accuracy degree of estimating the road width this time.

Multiple-positioning manner: calculating, according to at least two positioning results obtained when the user walks on the road section, vertical distances from at least two positions of the user on the road section to a center line of the road section, and performing weighted average on the vertical distances according to positioning precision corresponding to the positioning results, where the road width of the current road section is twice a weighted average value.

Optionally, the terminal device may further obtain the confidence level according to a quantity of positioning times, a variance of the road widths obtained by the calculations, and mean positioning precision.

After obtaining the road width, the terminal device may determine a navigation prompt time according to the road width, and perform navigation prompting for the user according to the navigation prompt time.

Specifically, by using the turning prompt as an example, the terminal device may adjust a size of a turning prompt range according to the road width.

For example, the adjusting a size of a turning prompt range according to the road width may be: determining whether the road width of the road section on which the user is currently located is greater than a preset width; if the road width is greater than the preset width, expanding the turning prompt range according to the road width; and if the road width is less than or equal to the preset width, narrowing the turning prompt range according to the road width or using a default turning prompt range.

Further, when adjusting the size of the turning prompt range according to the road width, the terminal device may further consider the foregoing confidence level; for example, it is determined whether the road width of the road section on which the user is currently located is greater than a preset width and whether the confidence level is greater than a preset confidence level; if the road width is greater than the preset width and the confidence level is greater than the preset confidence level, the turning prompt range is expanded according to the road width; otherwise, the turning prompt range is narrowed according to the road width or a default turning prompt range is used.

It should be noted that, the default turning prompt range mentioned above, for example, may be obtained by testing multiple typical road samples.

In view of this, if the road section on which the user is currently located is relatively wide, the turning prompt range may be adjusted a little larger, so as to avoid a problem that the terminal device may prompt the user to turn only when the user is close to the turning intersection or even after the user passes through the turning intersection because the turning prompt range is too small, which achieves an objective of prompting the user in time. If the road section on which the user is currently located is relatively narrow, the turning prompt range may be adjusted smaller or the default turning prompt range may be used, so as to avoid a problem that the terminal device prompts the user to turn at a non-turning intersection of a previous road section because the turning prompt range is too large, which prevents the user from turning incorrectly.

The terminal device may determine a turning prompt time by adjusting the turning prompt range, so as to perform turning prompting for the user according to the turning prompt time. For example, after the user walks into the turning prompt range, the terminal device performs turning prompting for the user.

By using the route-replanning prompt as an example, the terminal device may adjust a size of an adjacent road section region according to the road width.

For example, the adjusting a size of an adjacent road section region according to the road width may be: determining whether the road width of the road section on which the user is currently located is greater than a preset width; if the road width is greater than the preset width, expanding the adjacent road section region according to the road width; and if the road width is less than or equal to the preset width, narrowing the adjacent road section region according to the road width or using a default adjacent road section region.

Further, when adjusting the size of the adjacent road section region according to the road width, the terminal device may further consider the foregoing confidence level; for example, it is determined whether the road width of the road section on which the user is currently located is greater than a preset width and whether the confidence level is greater than a preset confidence level; if the road width is greater than the preset width and the confidence level is greater than the preset confidence level, the adjacent road section region is expanded according to the road width; otherwise, the adjacent road section region is narrowed according to the road width or a default adjacent road section region is used.

In view of this, if the road section on which the user is currently located is relatively wide, the adjacent road section region may be adjusted a little larger, so as to avoid a problem that the terminal device frequently prompts the user to replan a route because the adjacent road section region is too small. If the road section on which the user is currently located is relatively narrow, the adjacent road section region may be adjusted smaller or the default adjacent road section region may be used, so as to avoid a problem that the terminal device prompts the user to replan a route after the user deviates from a planning road section by a relatively long distance because the adjacent road section region is probably too large, which can ensure timely prompting.

The terminal device may determine a turning prompt time by adjusting the turning prompt range, so as to perform turning prompting for the user according to the turning prompt time. For example, after the user walks into the turning prompt range, the terminal device performs turning prompting for the user.

In this embodiment, according to a current position of a user and navigation planning route information, a road section on which the user is currently located may be determined; then a road width of the road section is obtained according to a positioning result obtained when the user walks on the road section and route information of the road section; a navigation prompt time is further determined according to the road width, and navigation prompt is performed for the user according to the navigation prompt time. Therefore, on each road section of a navigation planning route, a navigation prompt time can be dynamically adjusted according to a road width of the road section, so as to solve a technical problem, in the prior art, of inaccurate navigation caused by a road width difference between the road sections.

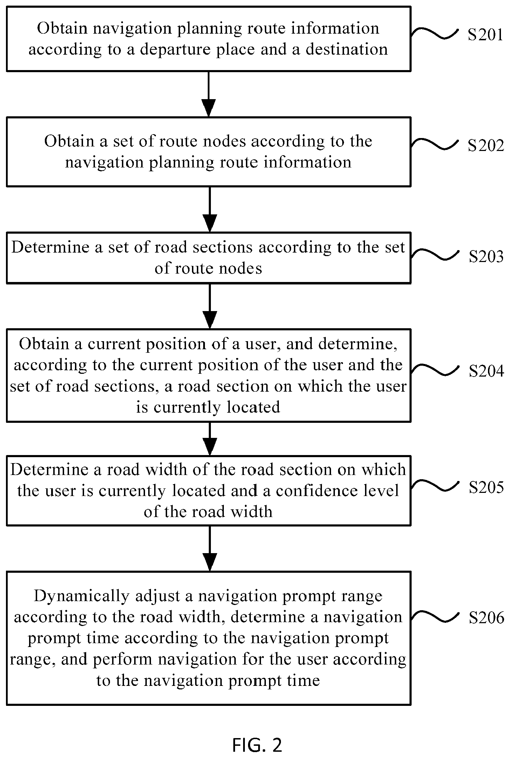

FIG. 2 is a flowchart of a second embodiment of a pedestrian navigation processing method according to an embodiment of the present invention. As shown in FIG. 2, the method in this embodiment may include:

S201. Obtain navigation planning route information according to a departure place and a destination.

The navigation planning route information may include a set of multiple route points that identify a navigation planning route and related information, and a line between every two adjacent route points is marked as a road section. Each route point may be represented, for example, by using latitude and longitude, and the related information may be, for example, a total length of the planning route and a quantity of route points of the planning route.

S202. Obtain a set of route points according to the navigation planning route information.

The terminal device may obtain the set of route points $\{P_0, P_1, ..., P_{K-1}\}$ from the navigation planning route information, where K is a total quantity of route points of the planning route, $P_0$ represents latitude and longitude corresponding to the departure place, and $P_{K-1}$ represents latitude and longitude corresponding to the destination.

S203. Determine a set of road sections according to the set of route points.

After the set of route points is determined, the terminal device may further determine the set of road sections $\{Sec_0, Sec_1, ..., SeC_{K-2}\}$, for example, a road section $Sec_i$ $(0 \leq i \leq N-2)$ is determined by route points $P_i$ and $P_{i+1}$ in the set

of route points.

S204. Obtain a current position of a user, and determine, according to the current position of the user and the set of road sections, a road section on which the user is currently located.

S205. Determine a road width of the road section on which the user is currently located and a confidence level of the road width.

It is assumed that the user is walking on the road section $Sec_i$ that includes the point $P_i$ and the point $P_{i+1}$, and N periodic positioning results are $(L,Rad) = \{(L_0,Rad_0),(L_1,Rad_1),...,(L_N\text{-}1,Rad_{N\text{-}1})\}$, where L represents latitude and longitude, Rad represents a positioning radius, the positioning radius may represent positioning precision, and a larger positioning radius indicates lower positioning precision. A road width $W_i$ of the road section $Sec_i$ is a weighted average of vertical distances between the N positioning results and a road center line of the road section $Sec_i$. Specifically, $W_i$ may be calculated by using formula (1):

$$W_i = \left( \sum_{k=1}^{N} \omega_k \cdot Dist(Sec_i, L_k) \right) / \sum_{k=1}^{N} \omega_k \qquad (1)$$

where $\omega_k$ is a weight factor, $Dist(Sec_i, L_k)$ is a vertical distance between the $k^{th}$ positioning result and the road center line of the road section $Sec_i$. When $\omega_k = =1$, $W_i$ is an average value of multiple calculation results:

$$W_i = \left( \sum_{k=1}^{N} Dist(Sec_i, L_k) \right) / N .$$

Preferably, the weight factor may be set as a decreasing function of the positioning radius; a smaller positioning radius indicates higher positioning precision and a higher contribution degree of a corresponding road width estimation result:

$$W_i = \left( \sum_{k=1}^{N} \omega(Rad_k) \cdot Dist(Sec_i, L_k) \right) / \sum_{k=1}^{N} \omega(Rad_k) .$$

For example, if the user is walking on the road section $Sec_i$, three obtained positioning results are respectively $(L,Rad) = \{(L_0, 5m),(L_1, 15m),(L_2, 10m)\}$, distances from the road center line are respectively $Dist = \{13.2m, 14.7m, 12.6m\}$, and values of the weight factor may be:

$$\omega = \begin{cases} \dfrac{1}{2}, & Rad \le 5 \\[2mm] \dfrac{1}{3}, & 5 < Rad \le 10 , \\[2mm] \dfrac{1}{6}, & Rad > 10 \end{cases}$$

the road width obtained by estimation is:

$$W_i = \left( \sum_{k=1}^{N} \omega(Rad_k) \cdot Dist(Sec_i, L_k) \right) / \sum_{k=1}^{N} \omega(Rad_k)$$

$$= 13.2 \times 0.5 + 14.7 \times \dfrac{1}{6} + 12.6 \times \dfrac{1}{3} = 13.25m$$

A confidence level $Conf_i$ relates to a quantity of positioning times N, a variance of all $Dist(Sec_i, L_k)$, and mean

positioning precision; if the quantity of positioning times is too small, $Dist(Sec_i, L_k)$ floats drastically (maybe the user is not walking on a road edge), or the mean positioning precision is relatively low, accuracy of the road width estimated this time is affected.

The confidence level $Conf_i$ in this embodiment may be implemented by using the following two methods:

(1) using the following formula (2) to obtain the confidence level $Conf_i$:

$$Conf_i = \Psi(N, \text{var}(Dist), mean(Rad))$$
$$= \alpha_1 \Psi_1(N) + \alpha_2 \Psi_2(\text{var}(Dist)) + \alpha_3 \Psi_3(mean(Rad)) \qquad (2);$$

or

(2) using the following formula (3) to obtain the confidence level $Conf_i$:

$$Conf_i = \Psi(N, \text{var}(Dist), mean(Rad))$$
$$= \Psi_1(N)^{\alpha_1} \cdot \Psi_2(\text{var}(Dist))^{\alpha_2} \cdot \Psi_2(mean(Rad))^{\alpha_3},$$

where coefficients meet $\alpha_1 + \alpha_2 + \alpha_3 = 1$, $\Psi_1(.)$ is an increasing function of the quantity of positioning times N, $\Psi_2(.)$ is a decreasing function of the variance $\text{var}(Dist)$ of all $Dist(Sec_i, L_k)$, and $\Psi_3(.)$ is an increasing function of mean positioning precision $mean(Rad)$ (a decreasing function of a mean positioning radius).

S206. Dynamically adjust a navigation prompt range according to the road width, determine a navigation prompt time according to the navigation prompt range, and perform navigation for the user according to the navigation prompt time.

By using a turning prompt as an example:

A first adjustment method: A turning prompt range may be flexibly adjusted with the road width of the road section on which the user is located before turning; and when the road width increases, the turning prompt range also increases, and when the road width decreases, the turning prompt range also decreases.

It should be noted that the turning prompt range in this embodiment of the present invention is a region range using a connection point of the road section and a next road section as a center, and the region may be circle, oval, square, rectangle, or another shape.

A second adjustment method: In consideration of uncertainty of the estimation result, the turning prompt range in the first adjustment method described above is flexibly adjusted with the road width of the road section on which the user is located before turning only when the confidence level is greater than a preset confidence level; otherwise, a preset default turning prompt range is used.

A third adjustment method: Because the road width obtained by estimation may be less than an actual road width on account of a factor such as that the user does not walk on either side of the road, a next turning prompt range $R_{i+1}^{turn}$ may be adjusted specific to a relatively wide road section:

$$R_{i+1}^{turn} = \begin{cases} R^{turn}(W_i), & W_i > W_{ref} \\ R_{default}^{turn}, & W_i \leq W_{ref} \end{cases}, \text{ where } R_{default}^{turn} \subset R^{turn}(W_i),$$

where a reference value of the road width $W_{ref}$ is used to differentiate between a regular road and a relatively wide road; for the regular road that meets $W_i \leq W_{ref}$, a default turning prompt range $R_{default}^{turn}$ is used, and for the relatively wide road that meets $W_i > W_{ref}$, an increasing function $R^{turn}(W_i)$ of W is used for setting. $W_{ref}$ may be obtained by statistics after extracting multiple typical walking road samples, and the default turning prompt range $R_{default}^{turn}$ may be obtained by testing the multiple typical walking road samples, so that better prompt effect can be achieved for most typical walking roads.

A fourth adjustment method: In consideration of uncertainty of the estimation result, for the third adjustment method described above, the confidence level of the road width obtained by estimation may be further considered at the same time. Dynamic adjustment is performed only when the confidence level of the result obtained by estimation is greater than a preset confidence level, and the road width is greater than a preset width; otherwise, a default turning prompt range is used:

$$R_{i+1}^{turn} = \begin{cases} R^{turn}(W_i), & if \ Conf > Conf_{th} \ and \ W_i > W_{ref} \\ R_{default}^{turn}, & else \end{cases} \text{, where } R_{default}^{turn} \subset R^{turn}(W_i).$$

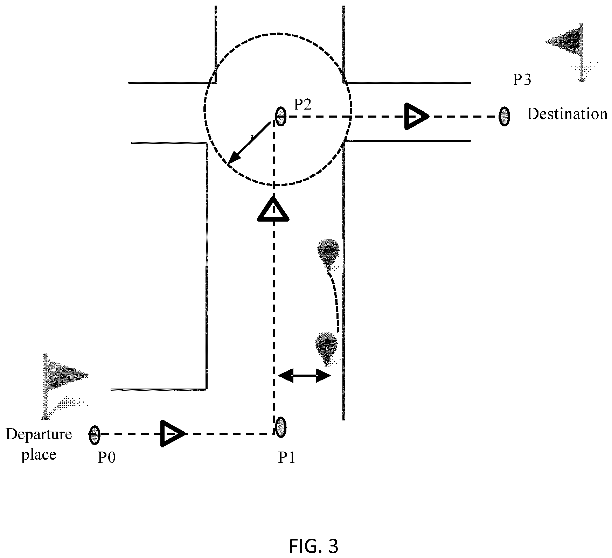

FIG. 3 is a schematic diagram of an adjustment process specific to the turning prompt in the second method embodiment shown in FIG. 2. As shown in FIG. 3, the turning prompt range may be a circular region using a route point as a center, and a radius r of the circular region may be dynamically adjusted according to a road width of a road section before turning, that is, a road section on which the user is currently located and that is between two route points $P_1$ and $P_2$.

Specific to the turning prompt range, the following manners corresponding to the foregoing four adjustment methods may specifically be used for implementation:

A first adjustment method: $r_i = \Phi(W_i)$, where $\Phi(.)$ is a nondecreasing function of the road width $W_i$, and a specific function form may be a linear nondecreasing function of the road width:

$$r_i = \Phi(W_i) = \beta \cdot W_i, \quad \text{s.t. } \beta > 0.$$

For example, $r_i = \Phi(W_i) = 2W_i$ indicates that the radius of the turning prompt range is twice the road width.

For a specific function form of $\Phi(.)$, a piecewise linear function of the road width may be further used, that is, the radius of the turning prompt range has different growth rates with the road widths in different road width intervals:

$$r_i = \Phi(W_i) = \begin{cases} \beta_1 \cdot W_i, & W_i \in [W_1, W_2) \\ \beta_2 \cdot W_i, & W_i \in [W_2, W_3) \\ \quad ... \\ \beta_T \cdot W_i, & W_i \in [W_T, W_{T+1}) \end{cases}$$

For example,
$$r_i = \Phi(W_i) = \begin{cases} 3W_i, & W_i \in [0, 5) \\ 2W_i, & W_i \in [5, 10) \\ 1.5W_i, & W_i \in [10, +\infty) \end{cases}$$

Besides the linear function, $\Phi(.)$ may be further a power function, an exponential function, a logarithmic function, or another nondecreasing function within a positive real number domain or a transformation thereof. For $\beta$ in the foregoing formula, observation data pairs $(W, r)$ that include different road widths and corresponding preferable turning prompt range radiuses may be obtained by testing multiple road sections, and $\beta$ in the foregoing linear function may be obtained in a linear fitting manner.

A second adjustment method: On the basis of the first adjustment method, a consideration factor of the confidence level is added.

A third adjustment method: $r_{i+1}^{turn} = \begin{cases} r^{turn}(W_i), & W_i > W_{ref} \\ r_{default}^{turn}, & W_i \leq W_{ref} \end{cases}$ , where

$$r_{default}^{turn} < r^{turn}(W_i),$$

where $r^{turn}(W_i)$ is a nondecreasing function of the road width, and may preferably be represented as:

$$r^{turn}(W_i) = r_{default}^{turn} + \alpha \cdot (W_i - W_{ref}), \ s.t. \ \alpha > 0.$$

A default turning prompt range radius $r_{default}^{turn}$ may be obtained by testing multiple typical walking road samples, so that better prompt effect can be achieved for most typical walking roads. For $\alpha$ in the foregoing formula, observation data pairs ($W,r$) that include different road widths and corresponding preferable turning prompt range radiuses may be obtained by testing multiple relatively wide roads, and $\alpha$ in the foregoing linear function may be obtained in a linear fitting manner.

A fourth adjustment method: On the basis of the third adjustment method, a consideration factor of the confidence level is added.

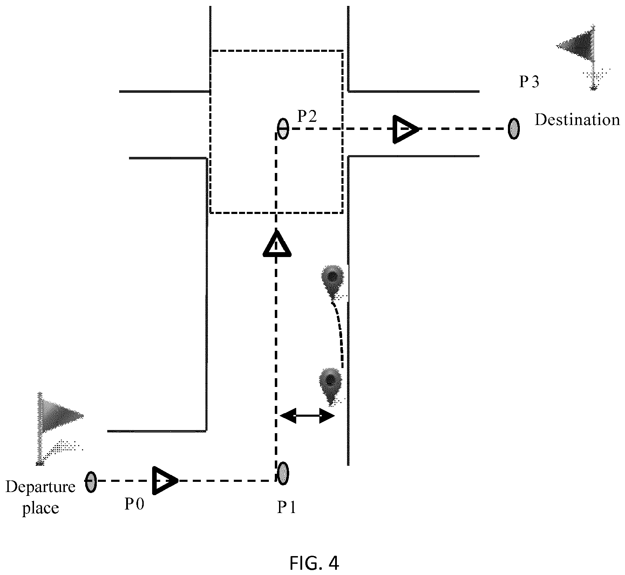

FIG. 4 is a schematic diagram of another adjustment process specific to the turning prompt in the second method embodiment shown in FIG. 2. As shown in FIG. 4, the turning prompt range may be a rectangular region using a route point P2 as a center, and two side lengths of the rectangular region are 2a (a is a half width) and 2b (b is a half height) respectively. A length of the rectangular region limits a turning prompt time (fast or slow), and a width of the rectangular region limits an effective range of turning prompt (prompting is not performed beyond the range). To achieve better prompt effect, two side lengths need to be dynamically adjusted according to the road width of the road section on which the user is located before turning.

Specific to the turning prompt range, the following manners corresponding to the foregoing four adjustment methods may specifically be used for implementation:

A first adjustment method: $a_i = \Upsilon_1(W_i)$, $b_i = \Upsilon_2(W_i)$, where $\Upsilon_1(.)$ and $\Upsilon_2(.)$ are nondecreasing functions of the road width, and specific function forms may be linear nondecreasing functions of the road width:

$$a_i = \Upsilon_1(W_i) = \eta \cdot W_i, \ b_i = \Upsilon_2(W_i) = \gamma \cdot W_i, \ \text{s.t. } \eta, \gamma > 0.$$

Preferably, $a_i = \Upsilon_1(W_i) = 2W_i$, $b_i = \Upsilon_2(W_i) = 2.5W_i$ may be set.

For specific function forms of $\Upsilon_1(.)$ and $\Upsilon_2(.)$, piecewise linear functions of the road width may be further used, that is, the half width $a_i$ and the half height $b_i$ of the turning prompt range separately have different growth rates with the road widths in different road width intervals:

$$a_i = \Upsilon_1(W_i) == \begin{cases} \eta_1 \cdot W_i, & W_i \in [W_1, W_2) \\ \eta_2 \cdot W_i, & W_i \in [W_2, W_3) \\ ... \\ \eta_T \cdot W_i, & W_i \in [W_T, W_{T+1}) \end{cases}, \qquad b_i = \Upsilon_1(W_i) == \begin{cases} \gamma_1 \cdot W_i, & W_i \in [W_1, W_2) \\ \gamma_2 \cdot W_i, & W_i \in [W_2, W_3) \\ ... \\ \gamma_T \cdot W_i, & W_i \in [W_T, W_{T+1}) \end{cases}.$$

Besides the linear functions, $\Upsilon_1(.)$ and $\Upsilon_2(.)$ may be further power functions, exponential functions, logarithmic functions, or other increasing functions within a positive real number domain or transformations thereof. For $\eta$ and $\gamma$ in the foregoing formulas, observation data pairs ($W,a,b$) that include different road widths and half widths and half heights of preferable turning prompt ranges may be obtained by testing multiple road sections, and $\eta$ and $\gamma$ in the foregoing linear functions may be obtained in a linear fitting manner.

A second adjustment method: On the basis of the first adjustment method, a consideration factor of the confidence level is added.

A third adjustment method: $(a_{i+1}^{turn}, b_{i+1}^{turn}) = \begin{cases} (A^{turn}(W_i), B^{turn}(W_i)), & W_i > W_{ref} \\ (a_{default}^{turn}, b_{default}^{turn}) & W_i \le W_{ref} \end{cases}$, where

$a_{default}^{turn} < A^{turn}(W_i), b_{default}^{turn} < B^{turn}(W_i)$, and $A^{turn}(W_i)$ and $B^{turn}(W_i)$ are nondecreasing functions of the road width, and may preferably be represented as:

$$A^{turn}(W_i) = a_{default}^{turn} + \theta \cdot (W_i - W_{ref}), \ s.t. \ \theta > 0,$$

$$B^{turn}(W_i) = b_{default}^{turn} + \vartheta \cdot (W_i - W_{ref}), \ s.t. \ \vartheta > 0.$$

A half width $a_{default}^{turn}$ and a half height $b_{default}^{turn}$ of a default turning prompt range may be obtained by testing multiple typical walking road samples, so that better prompt effect can be achieved for most typical walking roads. For $\theta$ and $\vartheta$ in the foregoing formulas, observation data pairs (*W,a,b*) that include different road widths and half widths and half heights of preferable turning prompt ranges may be obtained by testing multiple relatively wide roads, and $\theta$ and $\vartheta$ in the foregoing linear functions may be obtained in a linear fitting manner.

A fourth adjustment method: On the basis of the third adjustment method, a consideration factor of the confidence level is added.

By using a route-replanning prompt as an example:

A first adjustment method: A adjacent road section region may be flexibly adjusted with the road width of the road section; when the road width increases, the adjacent road section region also increases, and when the road width decreases, the adjacent road section region also decreases.

A second adjustment method: In consideration of uncertainty of the estimation result, the adjacent road section region in the first adjustment method described above is flexibly adjusted with the road width only when the confidence level is greater than a preset confidence level; otherwise, a default adjacent road section region is used.

A third adjustment method: Because the road width obtained by estimation may be less than an actual road width on account of a factor such as that the user does not walk on either side of the road, the adjacent road section region $R_{i+1}^{dev}$ may be processed only specific to a relatively wide road:

$$R_{i+1}^{dev} = \begin{cases} R^{dev}(W_i), & W_i > W_{ref} \\ R_{default}^{dev}, & W_i \leq W_{ref} \end{cases} \quad \text{, where} \quad R_{default}^{turn} \subset R^{turn}(W_i).$$

where a reference value of the road width $W_{ref}$ is used to differentiate between a regular road and a relatively wide road; for the regular road that meets $W_i \leq W_{ref}$ a default adjacent road section region $R_{default}^{dev}$ is used, and for the relatively wide road that meets $W_i > W_{ref}$ an increasing function $R^{dev}(W_i)$ of W is used for setting. $W_{ref}$ maybe obtained by statistics after extracting multiple typical walking road samples, and the default adjacent road section region $R_{default}^{dev}$ may be obtained by testing the multiple typical walking road samples, so that better prompt effect can be achieved for most typical walking roads.

A fourth adjustment method: In consideration of uncertainty of the estimation result, for the third adjustment method described above, the confidence level of the road width obtained by estimation may be further considered at the same time. Dynamic adjustment is performed only when the confidence level of the result obtained by estimation is greater than a preset confidence level, and the road width is greater than a preset width; otherwise, a default adjacent road section region is used:

$$R_i^{dev} = \begin{cases} R^{dev}(W_i), & if \ Conf > Conf_{th} \ and \ W_i > W_{ref} \\ R_{default}^{dev}, & else \end{cases} \quad \text{, where} \quad R_{default}^{dev} \subset R^{dev}(W_i).$$

Based on the foregoing adjusted navigation prompt range, the terminal device may determine a navigation prompt time, which enables to prompt the user accurately specific to different road section widths.

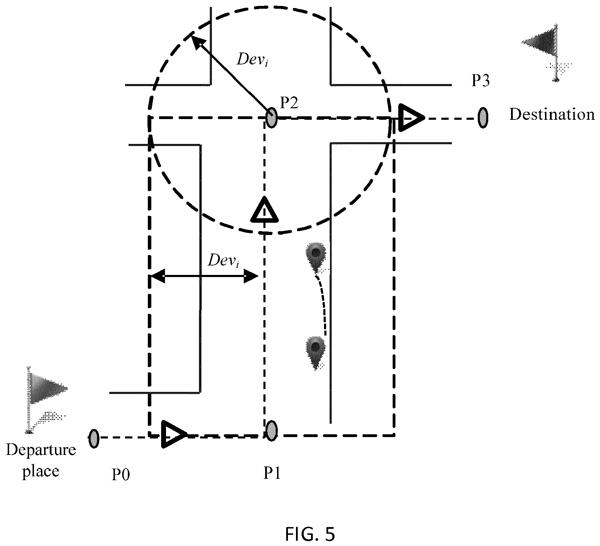

FIG. 5 is a schematic diagram of an adjustment process specific to the route-replanning prompt in the second method embodiment shown in FIG. 2. As shown in FIG. 5, the adjacent road section region may be formed by superposition of a rectangular region and a circular region, where the rectangular region uses a road section center line as an axis, a height of the rectangular region is a length of a line of road section points, and a half width of the rectangular region is a deviation threshold $Dev_i$, and the circular region uses a road section ending point as a center, and a radius of the circular region is the deviation threshold $Dev_i$. The deviation threshold $Dev_i$ may be dynamically adjusted according to a road width of a road section on which the user is located before turning.

Specific to the turning prompt range, the following manners corresponding to the foregoing four adjustment methods may specifically be used for implementation:

A first adjustment method: $Dev_i = \Theta(W_i)$,

$\Theta(.)$ is a nondecreasing function of the road width, and a specific functional form may be a linear nondecreasing function of the road width:

$$Dev_i = \Theta(W_i) = \lambda \cdot W_i, \quad \text{s.t. } \lambda > 0.$$

For example, $Dev_i = \Theta(W_i) = 4.W_i$ indicates that the deviation threshold is quadruple the road width.

For a specific functional form of $\Theta(W_i)$, a piecewise linear function of the road width may be further used, that is, the deviation threshold has different growth rates with the road widths in different road width intervals:

$$Dev_i = \Theta(W_i) = \begin{cases} \lambda_1 \cdot W_i, & W_i \in [W_1, W_2) \\ \lambda_2 \cdot W_i, & W_i \in [W_2, W_3) \\ \quad \cdots \\ \lambda_T \cdot W_i, & W_i \in [W_T, W_{T+1}) \end{cases}$$

For example,
$$Dev_i = \Theta(W_i) = \begin{cases} 7W_i, & W_i \in [0,5) \\ 5W_i, & W_i \in [5,10) \\ 4W_i, & W_i \in [10,+\infty) \end{cases}$$

Besides the linear function, $\Theta(.)$ may be further a power function, an exponential function, a logarithmic function, or another nondecreasing function within a positive real number domain or a transformation thereof. For $\lambda$ in the foregoing formula, observation data pairs ($W, Dev$) that include different road widths and corresponding preferable deviation thresholds may be obtained by testing multiple roads, and $\lambda$ in the foregoing linear function may be obtained in a linear fitting manner.

A second adjustment method: On the basis of the first adjustment method, a consideration factor of the confidence level is added.

A third adjustment method:

$$Dev_{i+1} = \begin{cases} \Omega(W_i), & W_i > W_{ref} \\ Dev_{default}, & W_i \le W_{ref} \end{cases} \text{, where } r_{default}^{turn} < r^{turn}(W_i),$$

where $\Omega(W_i)$ is a nondecreasing function of the road width, and may preferably be represented as:

$$\Omega(W_i) = Dev_{default} + \omega \cdot (W_i - W_{ref}), \quad s.t. \ \omega > 0.$$

A default deviation threshold $Dev_{default}$ may be obtained by testing multiple typical walking road samples, so that better prompt effect can be achieved for most typical walking roads. For $\omega$ in the foregoing formula, observation data pairs ($W, Dev$) that include different road widths and corresponding preferable deviation thresholds may be obtained by testing multiple relatively wide roads, and $\omega$ in the foregoing linear function may be obtained in a linear fitting manner.

A fourth adjustment method: On the basis of the third adjustment method, a consideration factor of the confidence level is added.

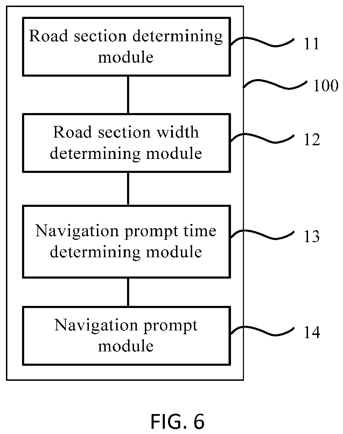

FIG. 6 is a schematic structural diagram of a first embodiment of a terminal device according to an embodiment of the present invention. As shown in FIG. 6, a terminal device 100 in this embodiment may include: a road section determining module 11, a road section width determining module 12, a navigation prompt time determining module 13, and a navigation prompt module 14.

The road section determining module 11 is configured to determine, according to a current position of a user and navigation planning route information, a road section on which the user is currently located, where the navigation planning route information includes route information of all road sections between a departure place and a destination.

The road section width determining module 12 is configured to obtain a road width of the road section according to a positioning result obtained when the user walks on the road section and route information of the road section, and send the road width of the road section to the navigation prompt time determining module 13.

The navigation prompt time determining module 13 is configured to receive the road width of the road section sent by the road section width determining module 12, determine, according to the road width, a navigation prompt time corresponding to the road section, and send the navigation prompt time to the navigation prompt module 14.

The navigation prompt module 14 is configured to receive the navigation prompt time sent by the navigation prompt module 14, and perform navigation prompting for the user according to the navigation prompt time.

The terminal device in this embodiment may be used to execute the technical solution of the method embodiment shown in FIG. 1, implementation principles and technical effect thereof are similar, and details are not further described herein.

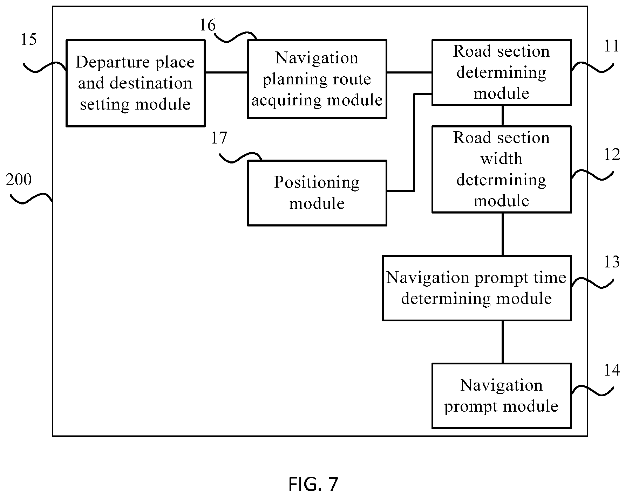

FIG. 7 is a schematic structural diagram of a second embodiment of a terminal device according to an embodiment of the present invention. As shown in FIG. 7, a terminal device 200 in this embodiment, based on the terminal device shown in FIG. 6, may further include: a departure place and destination setting module 15, a navigation planning route obtaining module 16, and a positioning module 17.

Specifically, when a user needs navigation, the user may preset a departure place and a destination by using the departure place and destination setting module 15; or, if there is a default departure place in the terminal device, the user needs to set only a destination. For example, a setting manner may be a text input manner, a voice input manner, a manner of clicking and selecting on a map, or the like. A specific setting process is similar to an existing navigation setting process, which is not further described herein.

After the departure place and the destination are determined, navigation planning route information may be obtained by using the navigation planning route obtaining module 16. For example, according to the departure place and the destination, navigation planning route information from the departure place to the destination may be obtained by invoking a third-party service, for example, by invoking the Baidu Maps or the Google Maps.

In a navigation process, a current position of the user may be obtained by using a positioning function of the positioning module 17, and the process, for example, may use a GPS positioning function, or optionally, may use a BeiDou positioning function. In a premise that the positioning function is enabled, the positioning module 17 may periodically or aperiodically obtain a current position of the user. Preferably, the positioning module 17 may obtain a current position of the user at regular intervals. The obtained current position of the user, for example, may be latitude and longitude information. Optionally, the positioning module 17 may further obtain positioning precision, for example, GPS positioning precision; the GPS positioning precision, for example, may be represented by using a positioning radius, where the positioning radius, for example, may be 5 m, 10 m, or 15 m, and a smaller radius indicates higher positioning precision. The road section determining module 11 may determine a road section on which the user is currently located by using the navigation planning route obtaining module 16 and the positioning module 17. Specifically, the road section determining module 11 may be configured to match latitude and longitude of the current position of the user with latitude and longitude of a starting point and latitude and longitude of an ending point of all road sections in the navigation planning route information, to determine the road section on which the user is currently located.

In this embodiment, the road section width determining module 12 is specifically configured to: send, to a network side device, the positioning result obtained when the user walks on the road section and the route information of the road section, to request the network side device to obtain a road width of the road section according to the positioning result and the route information of the road section; and receive the road width of the road section sent by the network side device.

In an implementation manner, the road section width determining module 12 is specifically configured to: determine a current position of the user according to one positioning result obtained when the user walks on the road section; determine, according to the route information of the road section, a center line of the road section on which the user is currently located; determine a vertical distance between the current position of the user and the center line of the road section on which the user is currently located; and use the vertical distance as a half road width of the road section on which the user is currently located.

Correspondingly, the navigation prompt time determining module 13 is specifically configured to: adjust, according to the road width, a navigation prompt range corresponding to the road section; or, adjust, according to the road width and a confidence level of the road width, a navigation prompt range corresponding to the road section, where the confidence level of the road width is positioning precision of the one positioning result; and determine the navigation prompt time according to the adjusted navigation prompt range.

In another implementation manner, the road section width determining module 12 is specifically configured to: determine at least two positions of the user according to at least two positioning results obtained when the user walks on the road section; determine, according to the route information of the road section, a center line of the road section on which the user is currently located; determine a vertical distance between each position of the at least two positions and the center line of the road section on which the user is currently located; perform weighted average on the determined vertical distances according to positioning precision of the at least two positioning results; and use a vertical distance obtained by performing weighted average as a half road width of the road section on which the user is currently located.

Correspondingly, the navigation prompt time determining module 13 is specifically configured to: adjust, according to the road width, a navigation prompt range corresponding to the road section; or, adjust, according to the road width and a confidence level of the road width, a navigation prompt range corresponding to the road section, where the confidence level of the road width is determined according to a quantity of positioning times of the at least two positioning results, a variance of the vertical distances, and mean positioning precision; and determine the navigation prompt time according to the adjusted navigation prompt range.

In the foregoing two possible implementation manners, the navigation prompt time determining module 13 is specifically configured to, if the road width is greater than a preset width, expand the navigation prompt range; otherwise, narrow the navigation prompt range or use a default navigation prompt range; or the navigation prompt time determining module 13 is specifically configured to, if the road width is greater than a preset width and the confidence level is greater than a preset confidence level, expand the navigation prompt range; otherwise, narrow the navigation prompt range or use a default navigation prompt range.

In specific implementation, if the navigation prompt range is a turning prompt range corresponding to the road section, where the turning prompt range is a region range using a connection point of the road section and a next road section as a center; and the navigation prompt time determining module 13 is specifically configured to, if the user enters an adjusted turning prompt range, determine that a turning prompt time comes.

If the navigation prompt range is an adjacent road section region corresponding to the road section, where the adjacent road section region is a region range using a center line of the road section as a center; and the navigation prompt time determining module 13 is specifically configured to, if the user walks out of an adjusted adjacent road section region, determine that a route-replanning prompt time comes.

The terminal device in this embodiment may be used to execute the technical solution of the method embodiment shown in FIG. 2, implementation principles and technical effect thereof are similar, and details are not further described herein.

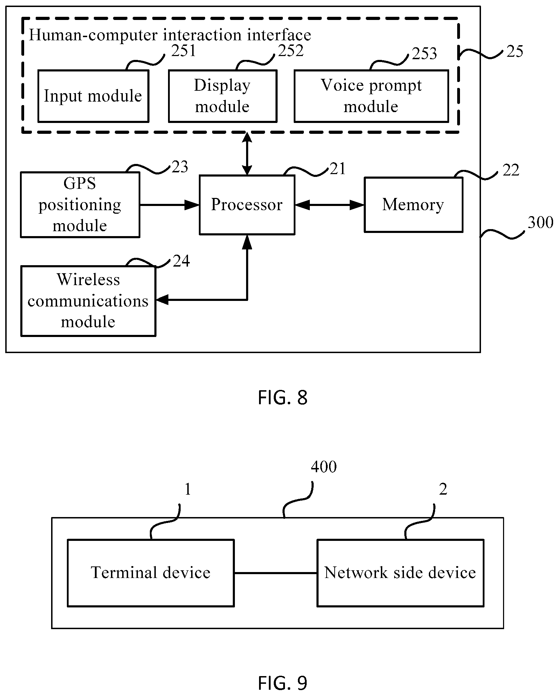

FIG. 8 is a schematic structural diagram of a third embodiment of a terminal device according to an embodiment of the present invention. As shown in FIG. 8, FIG. 8 is a schematic diagram of a hardware structure of a terminal device 300 in this embodiment, and the terminal device may include: a processor 21, a memory 22, a GPS positioning module 23, a wireless communications module 24, and a human-computer interaction interface 25. The human-computer interaction interface 25 may include an input module 251, a display module 252, and a voice prompt module 253.

Specifically, the memory 22 may store software code that implements the navigation function in the foregoing embodiments of the present invention. A user may input, by using the input module 251 in the human-computer interaction interface 25, a departure place and a destination to the processor 21; and the GPS positioning module 23 may periodically or aperiodically locate a position of the user. The processor 21 may execute the navigation processing process described in the foregoing embodiments by invoking the software code in the memory 22, and perform navigation prompting for the user by using the voice prompt module 253. In addition, the terminal device may perform interaction with a network side device by using the wireless communications module 24, so as to request the network side device to calculate road widths of all road sections required in the navigation process. In addition, the terminal device may further invoke a third-party service by using the wireless communications module 24, for example, by invoking the Baidu Maps or the Google Maps, to obtain navigation planning route information from the departure place to the destination.

The terminal device in this embodiment may be used to execute the technical solution of the method embodiment shown in FIG. 1 or FIG. 2, implementation principles and technical effect thereof are similar, and details are not further described herein.

FIG. 9 is a schematic structural diagram of an embodiment of a pedestrian navigation processing system according to an embodiment of the present invention. As shown in FIG. 9, a system 400 in this embodiment may include: a terminal device 1 and a network side device 2, where

the terminal device 1 is configured to: determine, according to a current position of a user and navigation planning route information, a road section on which the user is currently located, where the navigation planning route information includes route information of all road sections between a departure place and a destination; send, to the network side device, a positioning result obtained when the user walks on the road section and route information of the road section, to request the network side device 2 to obtain a road width of the road section according to the positioning result and the route information of the road section, and receive the road width of the road section sent by the network side device 2; determine, according to the road width, a navigation prompt time corresponding to the road section; and perform navigation prompting for the user according to the navigation prompt time; and

the network side device 2 is configured to: receive the positioning result obtained when the user walks on the road section and the route information of the road section that are sent by the terminal device 1; obtain the road width of the road section according to the positioning result and the route information of the road section; and send the road width of the road section to the terminal device.

For the terminal device 1 in this embodiment, a terminal device in any embodiment shown in the foregoing FIG. 6 to FIG. 8 may be used; and the network side device 2 may be, for example, any network side device such as a base station or a base station controller in an existing network architecture, which is not limited by the embodiment.

It can be seen that the embodiments of the present invention provide a pedestrian navigation processing method and system, and a terminal device, which may determine, according to a current position of a user and navigation planning route information, a road section on which the user is currently located; then obtain a road width of the road section according to a positioning result obtained when the user walks on the road section and route information of the road section; and further determine a navigation prompt time according to the road width, and perform navigation prompting for the user according to the navigation prompt time. Therefore, on each road section of a navigation planning route, a navigation prompt time can be dynamically adjusted according to a road width of the road section, so as to resolve a problem, in the prior art, of inaccurate navigation caused by a road width difference between the road sections, thereby effectively improving guiding effect of navigation.

Further embodiments of the present invention are provided in the following. It should be noted that the numbering used in the following section does not necessarily need to comply with the numbering used in the previous sections.

Embodiment 1. A pedestrian navigation processing method, comprising: determining, according to a current position of a user and navigation planning route information, a road section on which the user is currently located, wherein the navigation planning route information comprises route information of all road sections between a departure place and a destination; obtaining a road width of the road section according to a positioning result obtained when the user walks on the road section and route information of the road section; determining, according to the road width, a navigation prompt time corresponding to the road section; and performing navigation prompting for the user according to the navigation prompt time.

Embodiment 2. The method according to embodiment 1, wherein the obtaining a road width of the road section according to a positioning result obtained when the user walks on the road section and route information of the road section comprises: sending, to a network side device, the positioning result obtained when the user walks on the road section and the route information of the road section, to request the network side device to obtain the road width of the road section according to the positioning result and the route information of the road section; and receiving the road width of the road section sent by the network side device.

Embodiment 3. The method according to embodiment 1 or 2, wherein the obtaining a road width of the road section according to a positioning result obtained when the user walks on the road section and route information of the road section comprises: determining a current position of the user according to one positioning result obtained when the user walks on the road section; determining, according to the route information of the road section, a center line of the road section on which the user is currently located; determining a vertical distance between the current position of the user and the center line of the road section on which the user is currently located; and using the vertical distance as a half road width of the road section on which the user is currently located.

Embodiment 4. The method according to embodiment 3, wherein the determining, according to the road width, a navigation prompt time corresponding to the road section comprises: adjusting, according to the road width, a navigation prompt range corresponding to the road section; or, adjusting, according to the road width and a confidence level of the road width, a navigation prompt range corresponding to the road section, wherein the confidence level of the road width is positioning precision of the one positioning result; and determining the navigation prompt time according to the adjusted navigation prompt range.

Embodiment 5. The method according to embodiment 1 or 2, wherein the obtaining a road width of the road section according to a positioning result obtained when the user walks on the road section and route information of the road section comprises: determining at least two positions of the user according to at least two positioning results obtained when the user walks on the road section; determining, according to the route information of the road section, a center line of the road section on which the user is currently located; determining a vertical distance between each position of the at least two positions and the center line of the road section on which the user is currently located; performing weighted average on the determined vertical distances according to positioning precision of the at least two positioning results; and using a vertical distance obtained by performing weighted average as a half road width of the road section on which the user is currently located.

Embodiment 6. The method according to embodiment 5, wherein the determining, according to the road width, a navigation prompt time corresponding to the road section comprises: adjusting, according to the road width, a navigation prompt range corresponding to the road section; or, adjusting, according to the road width and a confidence level of the road width, a navigation prompt range corresponding to the road section, wherein the confidence level of the road width is determined according to a quantity of positioning times of the at least two positioning results, a variance of the vertical distances, and mean positioning precision; and determining the navigation prompt time according to the adjusted navigation prompt range.

Embodiment 7. The method according to embodiment 4 or 6, wherein the adjusting, according to the road width, a navigation prompt range corresponding to the road section comprises: if the road width is greater than a preset width, expanding the navigation prompt range; otherwise, narrowing the navigation prompt range or using a default navigation prompt range; and the adjusting, according to the road width and a confidence level of the road width, a navigation prompt range corresponding to the road section comprises: if the road width is greater than a preset width and the confidence level is greater than a preset confidence level, expanding the navigation prompt range; otherwise, narrowing the navigation prompt range or using a default navigation prompt range.

Embodiment 8. The method according to embodiment 4, 6, or 7, wherein the navigation prompt range is a turning prompt range corresponding to the road section, wherein the turning prompt range is a region range using a connection point of the road section and a next road section as a center; and the determining the navigation prompt time according to the adjusted navigation prompt range comprises: if the user enters the adjusted turning prompt range, determining that a turning prompt time comes.

Embodiment 9. The method according to embodiment 4, 6, or 7, wherein the navigation prompt range is an adjacent road section region corresponding to the road section, wherein the adjacent road section region is a region range using a center line of the road section as a center; and the determining the navigation prompt time according to the adjusted navigation prompt range comprises: if a position of the user is beyond the adjusted adjacent road section region, determining that a route-replanning prompt time comes.

Embodiment 10. The method according to any one of embodiments 1 to 9, wherein the determining, according to a current position of a user and navigation planning route information, a road section on which the user is currently located comprises: matching latitude and longitude of the current position of the user with latitude and longitude of a starting point and latitude and longitude of an ending point of all road sections in the navigation planning route information, to determine the road section on which the user is currently located.

Embodiment 11. A terminal device, comprising: a road section determining module, configured to determine, according to a current position of a user and navigation planning route information, a road section on which the user is currently located, wherein the navigation planning route information comprises route information of all road sections between a departure place and a destination; a road section width determining module, configured to obtain a road width of the road section according to a positioning result obtained when the user walks on the road section and route information of the road section, and send the road width of the road section to a navigation prompt time determining module; the navigation prompt time determining module, configured to receive the road width of the road section sent by the road section width determining module, determine, according to the road width, a navigation prompt time corresponding to the road section, and send the navigation prompt time to a navigation prompt module; and the navigation prompt module, configured to receive the navigation prompt time sent by the navigation prompt time determining module, and perform navigation prompting for the user according to the navigation prompt time.

Embodiment 12. The terminal device according to embodiment 11, wherein the road section width determining module is specifically configured to: send, to a network side device, the positioning result obtained when the user walks on the road section and the route information of the road section, to request the network side device to obtain the road width of the road section according to the positioning result and the route information of the road section; and receive the road width of the road section sent by the network side device.

Embodiment 13. The terminal device according to embodiment 11, wherein the road section width determining module is specifically configured to: determine a current position of the user according to one positioning result obtained when the user walks on the road section; determine, according to the route information of the road section, a center line of the road section on which the user is currently located; determine a vertical distance between the current position of the user and the center line of the road section on which the user is currently located; and use the vertical distance as a half road width of the road section on which the user is currently located.

Embodiment 14. The terminal device according to embodiment 13, wherein the navigation prompt time determining module is specifically configured to: adjust, according to the road width, a navigation prompt range corresponding to the road section; or, adjust, according to the road width and a confidence level of the road width, a navigation prompt range corresponding to the road section, wherein the confidence level of the road width is positioning precision of the one positioning result; and determine the navigation prompt time according to the adjusted navigation prompt range.

Embodiment 15. The terminal device according to embodiment 11, wherein the road section width determining module is specifically configured to: determine at least two positions of the user according to at least two positioning results obtained when the user walks on the road section; determine, according to the route information of the road section, a center line of the road section on which the user is currently located; determine a vertical distance between each position of the at least two positions and the center line of the road section on which the user is currently located; perform weighted average on the determined vertical distances according to positioning precision of the at least two positioning results; and use a vertical distance obtained by performing weighted average as a half road width of the road section on which the user is currently located.

Embodiment 16. The terminal device according to embodiment 15, wherein the navigation prompt time determining module is specifically configured to: adjust, according to the road width, a navigation prompt range corresponding to the road section; or, adjust, according to the road width and a confidence level of the road width, a navigation prompt range corresponding to the road section, wherein the confidence level of the road width is determined according to a quantity of positioning times of the at least two positioning results, a variance of the vertical distances, and mean positioning precision; and determine the navigation prompt time according to the adjusted navigation prompt range.

Embodiment 17. The terminal device according to embodiment 14 or 16, wherein the navigation prompt time determining module is specifically configured to, if the road width is greater than a preset width, expand the navigation prompt range; otherwise, narrow the navigation prompt range or use a default navigation prompt range; or the navigation prompt time determining module is specifically configured to, if the road width is greater than a preset width and the confidence level is greater than a preset confidence level, expand the navigation prompt range; otherwise, narrow the navigation prompt range or use a default navigation prompt range.

Embodiment 18. The terminal device according to embodiment 14, 16, or 17, wherein the navigation prompt range is a turning prompt range corresponding to the road section, wherein the turning prompt range is a region range using a connection point of the road section and a next road section as a center; and the navigation prompt time determining module is specifically configured to, if the user enters the adjusted turning prompt range, determine that a turning prompt time comes.

Embodiment 19. The terminal device according to embodiment 14, 16, or 17, wherein the navigation prompt range is an adjacent road section region corresponding to the road section, wherein the adjacent road section region is a region range using a center line of the road section as a center; and the navigation prompt time determining module is specifically configured to, if a position of the user is beyond the adjusted adjacent road section region, determine that a route-replanning prompt time comes.

Embodiment 20. The terminal device according to any one of embodiments 11 to 19, wherein the road section determining module is specifically configured to match latitude and longitude of the current position of the user with latitude and longitude of a starting point and latitude and longitude of an ending point of all road sections in the navigation planning route information, to determine the road section on which the user is currently located.

Embodiment 21. A pedestrian navigation processing system, comprising: a terminal device, configured to: determine, according to a current position of a user and navigation planning route information, a road section on which the user is currently located, wherein the navigation planning route information comprises route information of all road sections between a departure place and a destination; send, to a network side device, a positioning result obtained when the user walks on the road section and route information of the road section, to request the network side device to obtain a road width of the road section according to the positioning result and the route information of the road section, and receive the road width of the road section sent by the network side device; determine, according to the road width, a navigation prompt time corresponding to the road section; and perform navigation prompting for the user according to the navigation prompt time; and the network side device, configured to: receive the positioning result obtained when the user walks on the road section and the route information of the road section that are sent by the terminal device; obtain the road width of the road section according to the positioning result and the route information of the road section; and send the road width of the road section to the terminal device.

The embodiments in this specification are all described in a progressive manner, for same or similar parts in the embodiments, reference may be made to these embodiments, and each embodiment focuses on a difference from other embodiments.

It should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementation manners, a person skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of the present invention.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A navigation processing method performed by a terminal device, comprising:

   determining (S101) a road section on which the user is currently located;
   obtaining (S102) a road width of the road section;
   adjusting a navigation prompt range according to the road width, wherein the navigation prompt range is a region range using a connection point of the road section and a next road section as a center;
   determining a navigation prompt time according to the navigation prompt range, wherein the navigation prompt time is a moment when the user enters the navigation prompt range; and
   performing navigation prompting for the user according to the navigation prompt time.

2. The method according to claim 1, wherein the obtaining a road width of the road section comprises:

   sending a positioning result and route information of the road section to a network side device; and
   receiving the road width of the road section sent by the network side device.

3. The method according to claim 1 or 2, wherein the adjusting a navigation prompt range according to the road width comprises:
   if the road width is greater than a preset width, expanding the navigation prompt range; otherwise, narrowing the navigation prompt range or using a default navigation prompt range.

4. The method according to claim 1, wherein the obtaining a road width of the road section comprises:

   determining a current position of the user according to a positioning result;
   determining according to route information of the road section, a center line of the road section;
   determining a perpendicular distance between the current position of the user and the center line of the road section; and
   using the perpendicular distance as a half road width of the road section.

5. The method according to claim 1, wherein the obtaining a road width of the road section comprises:

   determining at least two positions of the user according to at least two positioning results obtained when the user moves on the road section;
   determining according to the route information of the road section, a center line of the road section;
   determining a vertical distance between each position of the at least two positions and the center line of the road section;
   performing weighted average on the determined vertical distances; and
   using a vertical distance obtained by performing weighted average as a half road width of the road section.

6. The method according to claim 4 or 5, wherein the adjusting a navigation prompt range according to the road width comprises:
   adjusting, according to the road width and a confidence level of the road width, the navigation prompt range corresponding to the road section, wherein the confidence level of the road width is positioning precision of the positioning result.

7. The method according to claim 6, wherein the adjusting a navigation prompt range according to the road width comprises:
   if the road width is greater than a preset width and the confidence level is greater than a preset confidence level, expanding the navigation prompt range; otherwise, narrowing the navigation prompt range or using a default navigation prompt range.

8. The method according to any one of claims 1 to 7, wherein the determining, by the terminal, a road section on which the user is currently located comprises:

matching latitude and longitude of a current position of the user with latitude and longitude of a starting point and latitude and longitude of an ending point of all road sections in navigation planning route information, to determine the road section on which the user is currently located.

9. A terminal device, comprising:

a road section determining module (11), configured to determine, a road section on which the user is currently located;

a road section width determining module (12), configured to obtain a road width of the road section;

the navigation prompt time determining module (13), configured to receive the road width of the road section sent by the road section width determining module (12), adjust a navigation prompt range according to the road width, wherein the navigation prompt range is a region range using a connection point of the road section and a next road section as a center, determine, a navigation prompt time according to the navigation prompt range, wherein the navigation prompt time is a moment when the user enters the navigation prompt range, and send the navigation prompt time to a navigation prompt module (14); and

the navigation prompt module (14), configured to receive the navigation prompt time sent by the navigation prompt time determining module (13), and perform navigation prompting for the user according to the navigation prompt time.

10. The terminal device according to claim 9, wherein the road section width determining module (12) is specifically configured to:

send a positioning result and the route information of the road section to a network side device; and receive the road width of the road section sent by the network side device.

11. The terminal device according to claim 9 or 10, wherein the navigation prompt time determining module (13) is specifically configured to:

if the road width is greater than a preset width, expand the navigation prompt range; otherwise, narrow the navigation prompt range or use a default navigation prompt range.

12. The terminal device according to claim 9, wherein the road section width determining module (12) is specifically configured to:

determine a current position of the user according to a positioning result;

determine, according to route information of the road section, a center line of the road section;

determine a perpendicular distance between the current position of the user and the center line of the road section; and

use the perpendicular distance as a half road width of the road section.

13. The terminal device according to claim 9, wherein the road section width determining module (12) is specifically configured to:

determine at least two positions of the user according to at least two positioning results obtained when the user moves on the road section;

determine, according to the route information of the road section, a center line of the road section;

determine a vertical distance between each position of the at least two positions and the center line of the road section;

perform weighted average on the determined vertical distances; and

use a vertical distance obtained by performing weighted average as a half road width of the road section.

14. The terminal device according to claim 12 or 13, wherein the navigation prompt time determining module (13) is specifically configured to:

adjust, according to the road width and a confidence level of the road width, the navigation prompt range corresponding to the road section, wherein the confidence level of the road width is positioning precision of the positioning result.

**15.** The terminal device according to claim 14, wherein the navigation prompt time determining module (13) is specifically configured to:

if the road width is greater than a preset width and the confidence level is greater than a preset confidence level, expand the navigation prompt range; otherwise, narrow the navigation prompt range or use a default navigation prompt range.

Determine, according to a current position of a user and navigation planning route information, a road section on which the user is currently located, where the navigation planning route information includes route information of all road sections between a departure place and a destination → S 101

Obtaining a road width of the road section according to a positioning result obtained when the user walks on the road section and route information of the road section → S 102

Determine, according to the road width, a navigation prompt time corresponding to the road section → S 103

Perform navigation prompting for the user according to the navigation prompt time → S 104

FIG. 1

Obtain navigation planning route information according to a departure place and a destination — S201

Obtain a set of route nodes according to the navigation planning route information — S202

Determine a set of road sections according to the set of route nodes — S203

Obtain a current position of a user, and determine, according to the current position of the user and the set of road sections, a road section on which the user is currently located — S204

Determine a road width of the road section on which the user is currently located and a confidence level of the road width — S205

Dynamically adjust a navigation prompt range according to the road width, determine a navigation prompt time according to the navigation prompt range, and perform navigation for the user according to the navigation prompt time — S206

FIG. 2

FIG. 3

P 3

P 2

Destination

Departure
place

P 0

P 1

FIG. 4

$Dev_i$

P2

P3

Destination

$Dev_i$

Departure
place

P0

P1

FIG. 5

```
┌─────────────────────────────────────┐
│  ┌─────────────────────────┐         │
│  │ Road section determining│ ─╮ 11   │
│  │        module           │  │      │
│  └─────────────────────────┘         │
│              │                ─╮ 100 │
│  ┌─────────────────────────┐         │
│  │   Road section width    │ ─╮ 12   │
│  │   determining module    │  │      │
│  └─────────────────────────┘         │
│              │                       │
│  ┌─────────────────────────┐         │
│  │  Navigation prompt time │ ─╮ 13   │
│  │    determining module   │  │      │
│  └─────────────────────────┘         │
│              │                       │
│  ┌─────────────────────────┐         │
│  │    Navigation prompt    │ ─╮ 14   │
│  │         module          │  │      │
│  └─────────────────────────┘         │
└─────────────────────────────────────┘
```

FIG. 6

FIG. 7

FIG. 8

FIG. 9

Europäisches
Patentamt

European
Patent Office

Office européen
des brevets

# EUROPEAN SEARCH REPORT

Application Number

EP 19 15 8420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 278 943 B1 (YAMAUCHI HIDEAKI [JP]) 21 August 2001 (2001-08-21) * column 2, line 41 - line 44 * * column 4, line 53 - line 61 * * column 5, line 37 - column 6, line 7 * ----- | 1-15 | INV. G01C21/34 G01C21/26 G08G1/0968 G01C21/20 G01C21/36 |
| A | JP 2011 232042 A (PANASONIC CORP) 17 November 2011 (2011-11-17) * the whole document * ----- | 1-15 | G01S19/39 G08G1/005 |
| A | JP 2004 045156 A (NTT SOFTWARE CORP) 12 February 2004 (2004-02-12) * paragraphs [0013], [0026], [0029], [0022], [0049], [0050], [0029], [0021] * ----- | 1-15 | |

TECHNICAL FIELDS
SEARCHED (IPC)

G01C
G08G

The present search report has been drawn up for all claims

| Place of search | Date of completion of the search | Examiner |
|---|---|---|
| The Hague | 13 August 2019 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 8420

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2019

| Patent document cited in search report | | Publication date | Patent family member(s) | | Publication date |
|---|---|---|---|---|---|
| US 6278943 | B1 | 21-08-2001 | JP | 2000258179 A | 22-09-2000 |
| | | | US | 6278943 B1 | 21-08-2001 |
| JP 2011232042 | A | 17-11-2011 | NONE | | |
| JP 2004045156 | A | 12-02-2004 | JP | 4127774 B2 | 30-07-2008 |
| | | | JP | 2004045156 A | 12-02-2004 |

EPO FORM P0459